# EUROPÄISCHE PATENTSCHRIFT

(11) **EP 4 115 200 B1**
(45) Veröffentlichungstag und Bekanntmachung des Hinweises auf die Patenterteilung: **16.07.2025**
(21) Anmeldenummer: 21707968.0
(22) Anmeldetag: 23.02.2021
(51) Int. Cl.: G01S 7/521, G01S 15/88, G01V 1/18

(54) **WASSERSCHALLWANDLERMODUL ZUM EMPFANG ODER AUSSENDEN VON WASSERSCHALL**
WATERBORNE SOUND TRANSDUCER FOR RECEIVING OR TRANSMITTING WATERBORNE SOUND
TRANSDUCTEUR SONORE EN MILIEU AQUEUX POUR LA RÉCEPTION OU LA TRANSMISSION D'UN SON EN MILIEU AQUEUX

(30) Priorität: 04.03.2020 DE 102020202775
(43) Veröffentlichungstag der Anmeldung: 11.01.2023
(73) Patentinhaber: ATLAS ELEKTRONIK GmbH, 28309 Bremen (DE); thyssenkrupp AG, 45143 Essen (DE)
(72) Erfinder: EWERT, Alexander, 28832 Achim (DE); HELFMEIER, Kilian, 27367 Sottrum (DE); PARDUN, Torben, 28309 Bremen (DE); GELZE, Johannes, 27726 Worpswede (DE); GARBERS, Nils, 28816 Stuhr (DE)
(74) Vertreter: thyssenkrupp Intellectual Property GmbH
(86) Internationale Anmeldenummer: PCT/EP2021/054460
(87) Internationale Veröffentlichungsnummer: WO 2021/175665

(56) Entgegenhaltungen:
- DE-A1- 102008 029 269
- DE-A1- 102016 104 399
- US-A1- 2018 059 243
- US-A1- 2019 331 779

## Beschreibung

Die Erfindung bezieht sich auf die Kontaktierung von Wasserschallwandlern. Wasserschallwandler werden typischerweise über Kabel mit der Signalverarbeitung, d.h. einem Analog/Digital-Wandler, einer Auswerteelektronik etc., verbunden. Die Anforderungen an die Sonartechnik werden jedoch stetig größer, so dass immer mehr Wasserschallwandler auf gleichem Raum angeordnet werden, um die Auflösung der empfangenen Wasserschallsignale zu verbessern. Dadurch werden jedoch die Kabelbäume zur Kontaktierung der Wasserschallwandler immer dicker und benötigen dadurch mehr Bauraum, der nicht für Wasserschallwandler zur Verfügung steht. Module von Wasserschallwandlern, die aus einem Wasserschallwandler und einer damit mechanisch und elektrisch verbundenen Platine bestehen, sind beispielsweise in DE102016104399A1 und der DE102008029269A1 offenbart.

Die Aufgabe der vorliegenden Erfindung besteht deshalb darin, ein verbessertes Konzept für Wasserschallwandler zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen ein Wasserschallwandlermodul zum Empfang oder Aussenden von Wasserschall. Das Wasserschallwandlermodul umfasst einen Wasserschallwandler und eine Platine. Der Wasserschallwandler ist ausgebildet, den Wasserschall zu empfangen und entsprechend des empfangenen Wasserschalls ein Wasserschallsignal auszugeben. Der Wasserschallwandler weist beispielsweise eine Piezokeramik auf. Der Wasserschallwandler, genauer die Piezokeramik, ist typischerweise als Hohlkörper geformt, so dass die durch Druckänderungen erzeugten Spannungen der Piezokeramik auch im Inneren der Piezokeramik abgegriffen werden können. Die Piezokeramik kann aber auch als Vollkörper ausgeführt sein. Hierzu kann eine Außenfläche und/oder eine Innenfläche des Wasserschallwandlers, genauer der Piezokeramik, zumindest teilweise elektrisch leitend, insbesondere metallisch, beschichtet sein. Die Beschichtung bildet jeweils eine Elektrode des Wasserschallwandlers.

Die Platine ist ausgebildet, das Wasserschallsignal für eine Signalverarbeitung bereitzustellen. Zum Bereitstellen des Wasserschallsignals weist die Platine eine oder mehrere Leiterbahnen auf.

Die Signalverarbeitung kann bereits auf der Platine angeordnet sein. Alternativ kann die Platine die Wasserschallsignale auch nur sammeln, die (z.B. gemeinsam) in einem Kabel und/oder über weitere Platinen der Signalverarbeitung zugeführt werden.

So weist die Platine eine erste und eine zweite Leiterbahn auf, um eine (elektrische) Verbindung zwischen dem Wasserschallwandler und der Signalverarbeitung bereitzustellen. Optional kann die Platine darüber hinaus weitere Leiterbahnen aufweisen, um weitere Verbindungen zwischen dem Wasserschallwandler und der Signalverarbeitung bereitzustellen. Entsprechend weist der Wasserschallwandler eine erste und eine zweite Elektrode auf, wobei die erste Elektrode mit der ersten Leiterbahn und die zweite Elektrode mit der zweiten Leiterbahn elektrisch verbunden ist. Die weiteren Leiterbahnen können weitere Elektroden des Wasserschallwandlers und/oder Elektroden eines weiteren Wasserschallwandlers kontaktieren.

Als Signalverarbeitung kann eine Verstärkung und ggf. Digitalisierung der (analogen) Wasserschallsignale, eine Auswerteelektronik, etc. verstanden werden. Die Auswerteelektronik kann z.B. eine Richtungsbildung basierend auf einer Vielzahl von Wasserschallsignalen, eine Zieldetektion, eine Zielverfolgung, etc. umfassen. Ferner kann, wenn der Wasserschallwandler zum Senden von Wasserschall eingesetzt wird, auch ein Signalgenerator Teil der Signalverarbeitung sein, um ein Signal zur Ansteuerung des Wasserschallwandlers bereitzustellen.

Der Wasserschallwandler ist mittels eines Haftmittels mechanisch mit der Platine verbunden. Ferner ist der Wasserschallwandler elektrisch mit der Platine verbunden. Das Haftmittel ist beispielsweise ein Klebstoff oder ein Lot. Die elektrische Kontaktierung kann mittels eines Leithaftmittels, beispielsweise eines Leitklebstoffs, z.B. eines Silberleitklebstoffs, erfolgen. In diesem Fall unterscheidet sich das Leithaftmittel von dem Haftmittel. Das Leithaftmittel wird ergänzend zu dem Haftmittel verwendet.

Alternativ kann das Haftmittel aber auch als Leitklebstoff ausgestaltet sein, so dass die elektrische und die mechanische Verbindung der Platine mit dem Wasserschallwandler mittels des Haftmittels erfolgt. Somit ist es nicht notwendig, zwei verschiedene Klebstoffe zur mechanischen und elektrischen Kontaktierung zu verwenden. Der Leitklebstoff ist beispielsweise ein anisotrop leitfähiger Klebstoff. So können zwei Elektroden unterschiedlichen Potentials, d.h. solche Elektroden, die verschiedene Signale bereitstellen, mit dem gleichen Klebstofffilm, d.h. einer einzigen durchgehenden Klebstofffläche, kontaktiert werden. Der anisotrop leitfähige Klebstoff weist eine geringe Dichte an leitenden Partikeln, beispielsweise Silber, auf, die bei einer Kompression ausschließlich in Kompressionsrichtung eine leitende Verbindung aufbauen.

Idee ist es, die Verkabelung der Wasserschallwandler durch eine Platine zu ersetzen. Mit der Platine kann ein Wasserschallwandler, vorteilhafterweise jedoch eine Vielzahl von Wasserschallwandlern, elektrisch kontaktiert werden. Der Bauraum für die Platine ist dabei deutlich kleiner als der für entsprechende Kabel, da die Leitungsdichte der Leiterbahnen auf der Platine deutlich größer ist als die Leitungsdichte der Kabel. Dies liegt vor allem daran, dass die Kabel einzeln (elektrisch) mittels eines Mantels isoliert werden müssten. Dieser entfällt bei dem Einsatz der Platine. Ferner werden die Wasserschallwandler durch die Platine auch räumlich an einer definierten Position gehalten, wodurch Herstellungsverfahren des Wasserschallwandlermoduls, insbesondere das Gießen eines Umgussmaterials, vereinfacht werden.

Zudem bildet der Wasserschallwandler eine Klebefläche aus, wobei die Klebefläche auf der Platine aufliegt und auf der Platine einen Auflagebereich bildet, wobei die erste und/oder die zweite Leiterbahn in dem Auflagebereich der Platine verlaufen. Dass die Klebefläche auf der Platine aufliegt schließt auch mit ein, dass Klebefläche und Platine mittels des Haftmittels miteinander verbunden sind und somit zwischen Klebefläche und Platine eine weitere Schicht angeordnet ist. Die Klebefläche kann senkrecht zu einer Außenfläche des Wasserschallwandlers verlaufen. So ist die Klebefläche beispielsweise eine Stirnseite eine (Hohl-) Zylinders oder die Schnittfläche einer Kugelhalbschale. Die Außenfläche ist insbesondere die Fläche, auf der die Wasserschallwellen auf den Wasserschallwandler auftreffen. Der Auflagebereich ist der Bereich der Platine, die von dem Wasserschallwandler bedeckt ist, wenn dieser auf der Platine aufliegt.

Die erste und/oder die zweite Leiterbahn umschließen einen Teil der Klebefläche des Wasserschallwandlers einzeln oder gemeinsam zumindest zu 75%, zumindest zu 95% oder vollständig. So kann die erste Leiterbahn im Uhrzeigersinn und die zweite Leiterbahn gegen den Uhrzeigersinn auf der Platine verlaufen.

Umschließen die beiden Leiterbahnen einen Teil der Klebefläche des Wasserschallwandlers vollständig, so kann die erste Leiterbahn zu mindestens 50% den Teil der Klebefläche im Uhrzeigersinn umschließen und die zweite Leiterbahn zu mindestens 50% den Teil der Klebefläche gegen den Uhrzeigersinn umschließen. Gemeinsam umschließen die beiden Leiterbahnen den Teil der Klebefläche des Wasserschallwandlers dann vollständig. Alternativ kann beispielsweise bei Verwendung eines Vollkörpers, z.B. eines Vollzylinders, als Wasserschallwandler, auch nur eine Leiterbahn den Vollkörper an einer Stirnseite desselben kontaktieren und an einer gegenüberliegenden Stirnseite eine zweite Leiterbahn den Vollkörper kontaktieren. Diese Leiterbahnen können einen Teil der Klebefläche, die sich auf der Stirnfläche des Vollkörpers befindet, jeweils vollständig umschließen. Dies ist vorteilhaft, da durch die Leiterbahnen eine mechanische Barriere gegen eindringende Feuchtigkeit geschaffen wird und der Teil der Klebefläche, der von den Leiterbahnen umschlossen ist, vor der Feuchtigkeit geschützt ist. Der Innenbereich des Wasserschallwandlers ist somit besser vor Feuchtigkeit geschützt. In anderen Worten bilden die Leiterbahnen eine Diffusionssperre.

In Ausführungsbeispielen ist die erste Elektrode des Wasserschallwandlers auf einen Teilbereich der Klebefläche des Wasserschallwandlers geführt, wobei die erste Leiterbahn in dem Auflagebereich, der den Teilbereich der Klebefläche kontaktiert, mäanderförmig angeordnet ist. Ergänzend oder alternativ ist die zweite Elektrode des Wasserschallwandlers auf einen weiteren Teilbereich der Klebefläche des Wasserschallwandlers geführt, wobei die zweite Leiterbahn in dem Auflagebereich, der den weiteren Teilbereich der Klebefläche kontaktiert, mäanderförmig angeordnet ist. Ist die Elektrode des Wasserschallwandlers auf die Klebefläche geführt, kann die Elektrode die Leiterbahn direkt kontaktieren, wenn die Klebefläche auf der Platine aufliegt. In dem Bereich, in dem die Elektrode auf die Klebefläche geführt ist, kann die Leiterbahn zu einem Mäander geformt sein. Somit wird die Kontaktfläche zwischen der Elektrode und der Leiterbahn vergrößert und die elektrische Kontaktierung verbessert.

In Ausführungsbeispielen weist der Wasserschallwandler eine erste und eine zweite Kugelhalbschale auf, wobei die erste und die zweite Kugelhalbschale jeweils eine Klebefläche aufweisen, die die Platine vorder- und rückseitig kontaktieren um eine Hohlkugel zu bilden. Die Klebefläche ist insbesondere die Schnittfläche der Kugelhalbschalen. Werden die Kugelhalbschalen an der Schnittfläche zusammengesetzt, ist eine Hohlkugel gebildet. Die Platine ist dann vorderseitig mit der ersten Kugelhalbschale und rückseitig mit der zweiten Kugelhalbschale verbunden. Die Platine ist (mittig) zwischen den Kugelhalbschalen angeordnet.

Alternativ bildet der Wasserschallwandler einen Zylinder aus, wobei eine Stirnfläche des Zylinders die Klebefläche ausbildet. Der Zylinder kann ein Vollzylinder oder ein Hohlzylinder sein. Der Zylinder wird demnach an der Stirnfläche mit der (z.B. Vorderseite der) Platine verbunden. Optional kann ein weiterer Zylinder mit der Rückseite der Platine verbunden sein. Vorteilhafterweise verschließt die Platine den Hohlzylinder dann an einer der beiden Stirnseite oder mit einer weiteren Platine auch beide Stirnseiten. Insbesondere weist die Platine hierzu die Abwesenheit einer Öffnung innerhalb einer Projektion der Innenwände der Hohlzylinder auf. Anders ausgedrückt hat die Platine kein Loch bzw. keine Bohrung im Bereich des Hohlzylinders. Weiter vorteilhafterweise ist auch die gegenüberliegende Stirnseite des Hohlzylinders verschlossen. Das Verschließen der Stirnseiten des Hohlzylinders bildet eine Abschirmung gegen Störwellen (im Sinne der elektromagnetischen Robustheit), die die Wasserschallsignale verfälschen könnten. Ferner kann das Eindringen von Wasser in den Hohlzylinder verhindert oder zumindest auf eine Diffusion reduziert werden. Statt eines Zylinders oder einer Kugel kann auch eine Piezokompositkeramik mit beliebiger Geometrie verwendet werden. Ausführungsbeispiele zeigen ferner, dass der Wasserschallwandler mittels eines Leithaftmittels, insbesondere eines Leitklebstoffs, elektrisch mit der Platine verbunden ist, wobei sich das Leithaftmittel von dem Haftmittel unterscheidet. Mittels des Leithaftmittels wird die Kontaktierung zwischen der Elektrode, die vorteilhafterweise auf die Klebefläche geführt ist, und der Platine, insbesondere der entsprechenden Leiterbahn, hergestellt oder verbessert.

Das Leithaftmittel kann ergänzend zu dem Haftmittel zwischen der Platine und dem Wasserschallwandler angeordnet sein. Leithaftmittel und Haftmittel quellen jedoch durch die Diffusion von Wasser in das Haftmittel bzw. das Leithaftmittel auf. Durch die unterschiedliche Zusammensetzung des Leithaftmittels und des Haftmittels, insbesondere durch die Leitpartikel, insbesondere Silberpartikel, in dem Leithaftmittel, quellen Leithaftmittel und Haftmittel unterschiedlich stark auf. Die Folge ist, dass (mechanische) Spannungen entstehen können und die leitenden Partikel des Leithaftmittels nicht mehr miteinander in Kontakt stehen. Die Kontaktierung des Wasserschallwandlers zu der Platine kann hierdurch verloren gehen.

Hier ist es vorteilhaft, wie vorgenannt beschrieben, die Leiterbahnen im Bereich der Kontaktierung mit dem Wasserschallwandler, mäanderförmig anzuordnen. Das Leithaftmittel ist so auf einer größeren Fläche angeordnet und setzt sich auch zwischen die Mäander der Leiterbahnen. Hier ist eine Dicke (d.h. der Abstand zwischen Platine und Wasserschallwandler) des Leithaftmittels größer als unmittelbar auf der Leiterbahn. Bei einer größeren Dicke des Leithaftmittels kann dieses aber auch größere Spannungen aushalten bzw. quillt selber stärker auf. Somit wird die Kontaktierung des Wasserschallwandlers zu der Platine verbessert. Ferner ermöglicht die Nutzung des Leithaftmittels zur elektrischen Kontaktierung und die Nutzung des Haftmittels für die mechanische Kontaktierung eine automatische Bestückung und Fertigung der Wasserschallwandler. Das bisherige Verfahren mittels Löten der Kontakte im Inneren des Wasserschallwandlers ist deutlich aufwendiger in der Fertigung.

In Ausführungsbeispielen ist das Haftmittel derart zwischen der Platine und dem Wasserschallwandler angeordnet, dass das Haftmittel eine in sich geschlossenen Form bildet. Somit wird das Eindringen von Wasser, das über die Diffusion durch das Haftmittel hinausgeht, in den Wasserschallwandler verhindert. Die in sich geschlossene Form ist vorteilhafterweise in dem Auflagebereich des Wasserschallwandlers auf der Platine angeordnet. Ist separat zu dem Haftmittel das Leithaftmittel zwischen der Platine und dem Wasserschallwandler angeordnet, kann das Leithaftmittel innerhalb und/oder außerhalb der geschlossenen Form angeordnet sein.

In Ausführungsbeispielen weist die Platine eine Hauptstruktur und eine Nebenstruktur auf. Die Nebenstruktur verbindet den Wasserschallwandler mit der Hauptstruktur, wobei die Nebenstruktur einen Richtungswechsel aufweist. Der Richtungswechsel liegt demnach zwischen der Hauptstruktur und dem Wasserschallwandler. Die Hauptstruktur kann der Stamm der Platine sein, über den die Wasserschallsignale von unterschiedlichen Wasserschallwandlern gebündelt werden. Die Nebenstruktur bildet einen Ast, mittels dessen das Wasserschallsignal eines Wasserschallwandlers (über Leiterbahnen) zu der Hauptstruktur geleitet wird. Vorteilhafterweise ist die Nebenstruktur nicht gerade, sondern weist einen Richtungswechsel auf. So können Verschiebungen zwischen Hauptstruktur und Nebenstruktur kompensiert werden, ohne dass der Wasserschallwandler sich von der Nebenstruktur löst oder die Nebenstruktur bricht. Solche Verschiebungen und die damit verbundenen Kräfte treten beispielsweise auf, wenn die Platine und der Wasserschallwandler mit einem Umgussmaterial umgossen sind. Dringt Feuchtigkeit in das Umgussmaterial ein, quillt dieses auf und erzeugt so Spannungen, die auf die Platine und die Wasserschallwandler wirken. Weist die Nebenstruktur den Richtungswechsel auf können diese Spannungen von der Nebenstruktur absorbiert werden.

Alternativ kann der Wasserschallwandler auch an der Hauptstruktur angeordnet sein, wobei die Hauptstruktur der Platine einen Richtungswechsel aufweist. Vorteilhafterweise ist der Wasserschallwandler an einem Scheitelpunkt des Richtungswechsels angeordnet. Optional weist die Platine dann keine Nebenstruktur auf. In einer weiteren Alternative können die Wasserschallwandler auch freigestellt werden, so dass die Umgussstärke um die Wasserschallwandler lokal reduziert ist.

In Ausführungsbeispielen weist das Wasserschallwandlermodul eine Verstärkungsstruktur auf. Die Verstärkungsstruktur ist mechanisch mit der Platine verbunden ist. Als Verstärkungsstruktur kann ein Material eingesetzt werden, das eine größere Biegesteifigkeit aufweist, als die Platine. Ein solches Material ist beispielsweise GFK (glasfaserverstärkter Kunststoff). Vorteilhafterweise ist zumindest die Hauptstruktur der Platine durch die Verstärkungsstruktur gestützt. D.h., eine Nebenstruktur kann zumindest in Teilen frei von der Verstärkungsstruktur sein. Durch die Verstärkungsstruktur biegt sich die Platine auch dann nicht durch, wenn sie nur einseitig eingespannt ist. Somit ist es möglich, die Platine, z.B. mitsamt der Verstärkungsstruktur, in einem Fertigungsschritt mit dem Umgussmaterial zu umschließen. Das Umgussmaterial weist z.B. Polyurethan auf. Weiterhin ist eine Orientierung des Wasserschallmoduls im Raum beliebig wählbar. Ohne die Verstärkungsstruktur würde sich die Platine verbiegen und die Wasserschallwandler würden nicht mehr die vorbestimmten Abstände zueinander einhalten. Eine Auswertung der Wasserschallsignale beispielsweise hinsichtlich einer Einfallsrichtung von Schallwellen (Richtungsbildung) würde somit falsche Ergebnisse liefern.

In Ausführungsbeispielen ist der Wasserschallwandler oder das Wasserschallwandlermodul mit einer elektrisch leitenden Schicht, insbesondere zu mindestens 95%, vorzugsweis vollständig, beschichtet. So wird die elektromagnetische Robustheit des Wasserschallwandlermoduls durch die elektrisch leitende Schicht verbessert. In anderen Worten bildet die elektrisch leidende Schicht eine Abschirmung gegen äußere elektromagnetische Einflüsse. Die Gefahr einer Beeinflussung der Wasserschallsignale wird dadurch verringert. Weiterhin wird durch die elektrisch leitende Schicht eine Diffusionssperre gebildet, so dass die Platine und die Wasserschallwandler vollständig eingekapselt und somit vor Feuchtigkeit geschützt sind. Die elektrisch leitende Schicht kann beispielsweise mittels PVD (physical vapour deposition, dt.: physikalische Gasphasenabscheidung) auf dem Wasserschallwandler und/oder dem Wasserschallwandlermodul abgeschieden werden.

Analog ist ein Verfahren zur Herstellung eines Wasserschallwandlermoduls zum Empfang oder Aussenden von Wasserschall mit folgenden Schritten offenbart:

Bereitstellen eines Wasserschallwandlers, der ausgebildet ist, den Wasserschall zu empfangen und entsprechend des empfangenen Wasserschalls ein Wasserschallsignal auszugeben; Bereitstellen einer Platine, die ausgebildet ist, das Wasserschallsignal für einer Signalverarbeitung bereitzustellen; Verbinden des Wasserschallwandlers mechanisch mittels eines Haftmittels sowie elektrisch mit einer Platine.

In Ausführungsbeispielen weist das Verfahren weiter folgende Schritte auf: Verbinden einer Verstärkungsstruktur mechanisch mit der Platine; Einspannen der Verstärkungsstruktur in eine Gießform, so dass das der Wasserschallwandler frei schwebt; und Umgießen des Wasserschallwandlers und der Platine um das Wasserschallwandlermoduls zu erhalten. Somit ist es möglich, die Platine und die Wasserschallwandler in einem Schritt mit dem Umgussmaterial zu umgießen. Bisherige Verfahren sehen einen zweistufigen Prozess vor, da die Wasserschallwandler nicht freischwebend gehalten werden konnten, ohne dass Teile des Wasserschallwandlers nicht von dem Umgussmaterials umschlossen worden sind. Vorteilhafterweise werden die Wasserschallwandler und die Platine vollständig umgossen und die Verstärkungsstruktur zumindest teilweise. Nicht vergossen werden insbesondere die Auflage- bzw. Einspannpunkte der Verstärkungsstruktur.

Bevorzugte Ausführungsbeispiele der vorliegenden Erfindung werden nachfolgend Bezug nehmend auf die beiliegenden Zeichnungen erläutert. Es zeigen:
Fig. 1: eine Darstellung eines Wasserschallwandlermoduls, wobei Fig. 1a eine allgemeine schematische perspektivische Darstellung zeigt, Fig. 1b eine schematische perspektivische Darstellung eines zylinderförmigen Wasserschallwandlers mit an den Stirnseiten angeordneten Platinen zeigt und Fig. 1c eine Seitenansicht auf einen beschichteten Wasserschallwandler in einer kompakteren Ausgestaltung offenbart;
Fig. 2: eine schematische perspektivische Darstellung eines Ausführungsbeispiels des Wasserschallwandlermoduls in Fig. 2a, wobei das Wasserschallmodul in Fig. 2b von einem Umgussmaterial umgossen ist und wobei das Wasserschallmodul in Fig. 2c beschichtet ist;
Fig. 3: eine schematische Seitenansicht eines Wasserschallwandlers in Fig. 3a und in Fig. 3b eine schematische Schnittdarstellung des Wasserschallwandlers;
Fig. 4: eine schematische Draufsicht auf eine Platine des Wasserschallwandlermoduls, wobei Fig. 4a, Fig. 4b und Fig. 4c verschiedene Ausführungsformen zeigen;
Fig. 5: eine schematische Draufsicht auf die Platine, wobei Fig. 5a, Fig. 5b und Fig. 5c jeweils verschiedene Ausführungsformen von Nebenstrukturen der Platine zeigen und wobei Fig. 5d ein Ausführungsbeispiel zu Reduzierung von Spannungen ohne Nebenstruktur zeigt; und
Fig. 6: eine schematische perspektivische Darstellung des Wasserschallmoduls in einem Ausführungsbeispiel mit Stützstruktur.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

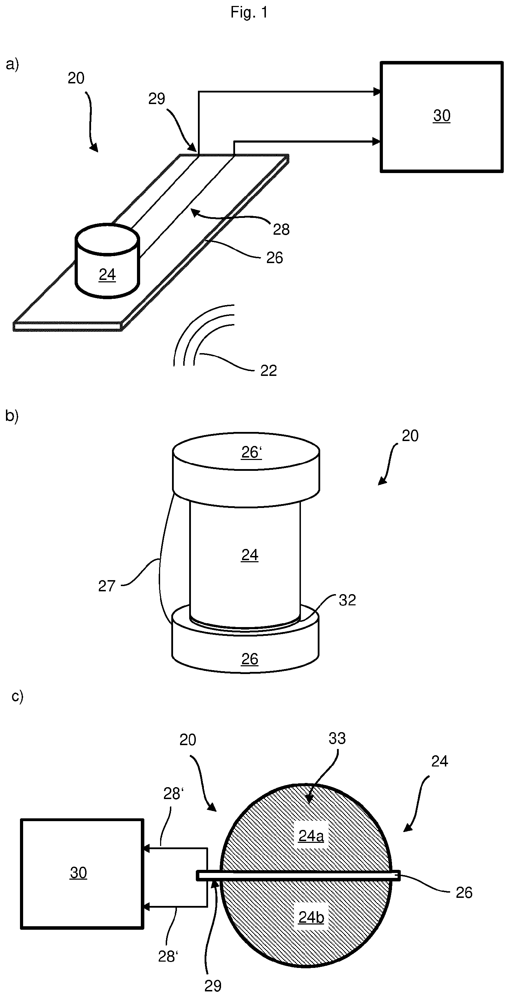

Fig. 1a zeigt eine schematische perspektivische Darstellung eines Wasserschallwandlermoduls 20 zum Empfang oder Aussenden von Wasserschall 22. Das Wasserschallwandlermodul 20 weist einen Wasserschallemfänger 24 und eine Platine 26 auf. Der Wasserschallwandler 24 empfängt den Wasserschall 22 und gibt entsprechend des empfangenen Wasserschalls 22 ein Wasserschallsignal aus. Das Wasserschallsignal kann mittels Leiterbahnen 28 auf der Platine 26 für eine Signalverarbeitung 30 bereitgestellt werden. Die Signalverarbeitung 30 kann eine beliebige Signalverarbeitung auf den Wasserschallsignalen durchführen. Hier ist die Signalverarbeitung separat von der Platine 26 angeordnet. Die Platine 26 kann einen Übergabepunkt aufweisen, an dem ein Stecker die Platine 26 kontaktiert und die Wasserschallsignale weiterleitet.

Der Wasserschallwandler 24 ist mechanisch mittels eines Haftmittels mit der Platine 26 sowie ferner auch elektrisch mit der Platine 26, insbesondere den Leiterbahnen 28, verbunden. Das Haftmittel ist insbesondere ein Klebstoff. Weitere Details zu dem Haftmittel werden hinsichtlich der nachfolgenden Figuren erläutert.

Es sei angemerkt, dass der Wasserschallwandler 24 in Fig. 1 als Hohlzylinder dargestellt ist. Dies ist jedoch nur beispielhaft gewählt. Es können Wasserschallwandler beliebiger Form eingesetzt und mit der Platine elektrisch und mechanisch verbunden werden. Insbesondere kann auch ein Wasserschallwandler verwendet werden, der aus zwei Kugelhalbschalen zusammengesetzt ist. Dies wird ebenfalls in den nachfolgenden Figuren genauer erläutert.

Fig. 1b zeigt eine schematische perspektivische Darstellung eines Zylinders als Wasserschallwandler 24. Der Zylinder kann ein Vollzylinder oder ein Hohlzylinder sein. Der Zylinder weist an beiden Stirnflächen jeweils eine Platine 26, 26' auf. Die erste Platine 26 kann eine erste Elektrode des Zylinders 24 kontaktieren, die zweite Platine 26' kann eine zweite Elektrode des Zylinders 24 kontaktieren. Ein Verbindungsmittel 27 kann beide Platinen 26, 26' elektrisch miteinander verbinden, damit nur eine Platine von der Signalverarbeitung kontaktiert werden braucht. Als Verbindungsmittel kann beispielsweise ein Draht oder ein Flachbandkabel eingesetzt werden. Das Verbindungsmittel kann auch der flexible Bereich einer Starrflex-Platine sein. Zwischen dem Wasserschallwandler 24 und der ersten Platine 26 ist hier das Haftmittel 32 von außen sichtbar dargestellt.

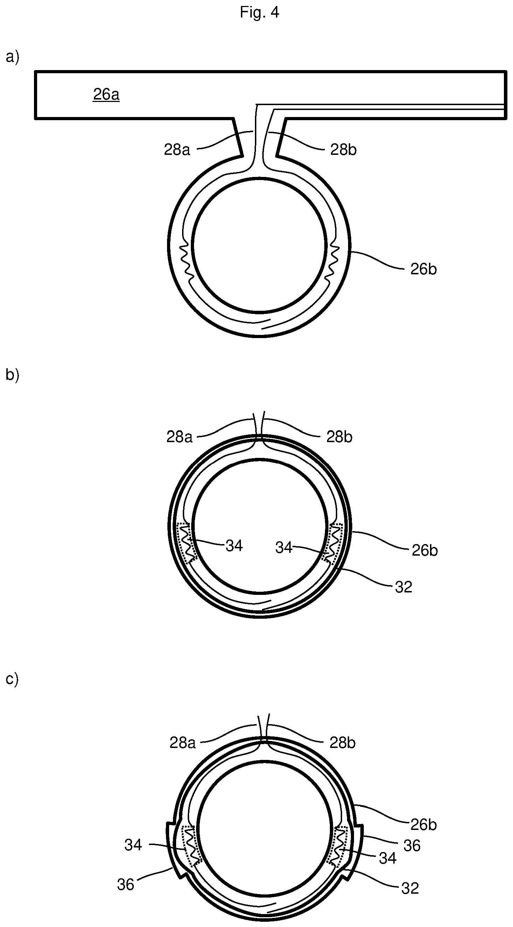

In den Fig. 4 wird eine mögliche Kontaktierung des Wasserschallwandlers mit zwei Leiterbahnen 28a, 28b gezeigt. Bei dem Ausführungsbeispiel aus Fig. 1b ist diese Kontaktierung möglich, durch die zweite Platine 26' reicht es aber aus, nur eine der beiden Leiterbahnen 28a, 28b pro Platine vorzusehen. Vorteilhafterweise ist diese Leiterbahn trotzdem umlaufend um den Zylinder angeordnet. Somit kann die Leiterbahn eine Diffusionssperre für das Haftmittel bilden, das im Inneren der umlaufenden Leiterbahn angeordnet ist. D.h., es ist schwieriger für Feuchtigkeit, in das Haftmittel hinein zu diffundieren.

Fig. 1c zeigt das Wasserschallwandlermodul in einer alternativen Darstellung mit einem beispielhaften kugelförmigen Wasserschallwandler 24. So weist der Wasserschallwandler 24 zum Empfang oder Aussenden von Wasserschallwellen eine erste und eine zweite Kugelhalbschale 24a, 24b auf. Die erste Kugelhalbschale 24a ist mit einer ersten Seite der Platine 26 (insbesondere elektrisch und mechanisch) verbunden. Die zweite Kugelhalbschale 24b ist mit einer zweiten Seite der Platine 26 (insbesondere elektrisch und mechanisch) verbunden. Die mechanische Verbindung kann mittels eines Haftmittels, beispielsweise eines Haftklebers erfolgen. Die elektrische Verbindung vorteilhafterweise mittels eines Leithaftmittels, beispielsweise einem Leitklebstoff. In andere Worten sind die beiden Kugelhalbschalen 24a, 24b mittels der Platine 26 zu einer Hohlkugel zusammengefügt. Die erste und die zweite Kugelhalbschale 24a, 24b sind mit einer elektrisch leitfähigen Schicht 33 beschichtet sein. Optional kann auch die zusammengesetzte Hohlkugel mit der elektrisch leitfähigen Schicht 33 beschichtet sein, d.h. zusätzlich zu den Kugelhalbschalen ist auch der außen sichtbare Teil der Platine 26 beschichtet.

Die Platine 26 kann ferner außerhalb der Hohlkugel eine Kontaktierung 29 aufweisen, mittels derer das Wasserschallsignal des Wasserschallwandlers 24 für die Signalverarbeitung 30 bereitgestellt wird. Die Platine 26 kann somit direkt an der Hohlkugel mit einem Kabel 28' verbunden werden, um das Wasserschallsignal der Signalverarbeitung 30 bereitzustellen.

Somit ist es möglich, einen nach außen vollständig geschirmten Wasserschallwandler 24 zu schaffen. Das Wasserschallsignal wird jeweils an der Innenseite der Kugelhalbschalen 24a und 24b abgegriffen und über die Platine nach außen geführt. Bisherige Lösungen sehen hier nur das Bohren eines Lochs vor, um die Innenseite einer außen geschirmten Kugel zu kontaktieren. Die Herstellung ist jedoch vergleichsweise aufwendig.

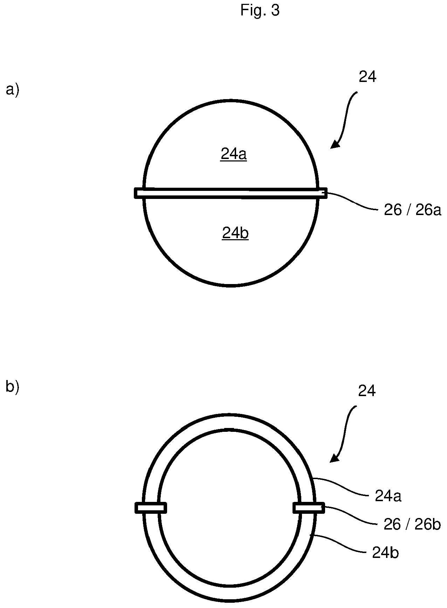

Weitere Ausgestaltungsoptionen sind den Ausführungsbeispielen der Fig. 3 und Fig. 4 zu entnehmen, wobei die in Fig. 4 gezeigte Hauptstruktur obsolet ist.

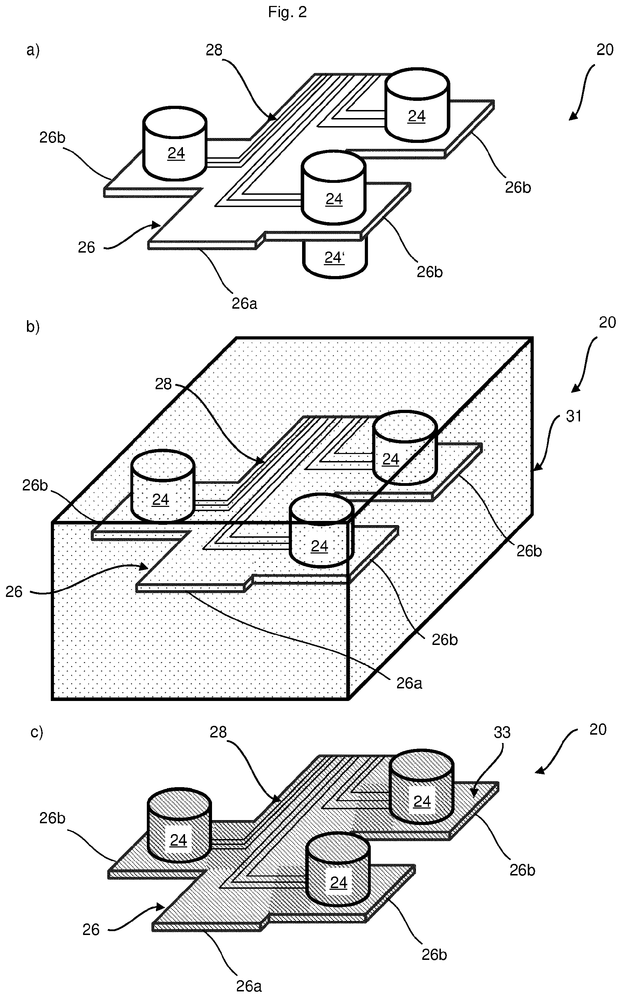

Fig. 2a zeigt eine schematische perspektivische Darstellung des Wasserschallwandlermoduls 20 gemäß einem Ausführungsbeispiel. Hier weist die Platine 26 eine Hauptstruktur 26a und drei Nebenstrukturen 26b auf. Die Anzahl der Nebenstrukturen 26b kann beliebig gewählt werden. An den Nebenstrukturen 26b sind die Wasserschallwandler 24 angeordnet. Die Wasserschallwandler 24 sind an einer Vorderseite der Platine 26 dargestellt. Es sind beispielhaft pro Wasserschallwandler 24 drei Leiterbahnen 28 gezeigt, die die Wasserschallwandler 24 elektrisch kontaktieren.

Beispielhaft ist ein rückseitiger Wasserschallwandler 24' gezeigt, der auf einer Rückseite der Platine 26 angeordnet ist. Die Leiterbahnen zur Kontaktierung des rückseitigen Wasserschallwandlers können ebenfalls auf der Rückseite der Platine 26 verlaufen.

Die Wasserschallwandler 24, 24' sind jeweils mit einer Stirnseite, die eine Klebefläche des Wasserschallwandlers 24, 24' ausbildet, mit der Platine 26, insbesondere der Nebenstruktur 26b, verbunden. Die gegenüberliegende Stirnseite ist vorteilhafterweise verschlossen.

Fig. 2b zeigt das Wasserschallwandlermodul 20 ohne den rückseitigen Wasserschallwandler 24' aus Fig. 2a, wobei die Platine 26 und die Wasserschallwandler 24 in einem Umgussmaterial 31 vergossen ist. Das Umgussmaterial 31 weist beispielsweise Polyurethan auf. Das Umgussmaterial 31 schützt die Platine 26 und die Wasserschallwandler 24 vor direktem Kontakt mit Seewasser. Ferner bietet das Umgussmaterial mechanischen Schutz für den Wasserschallwandler, z.B. vor Schlägen. Das Umgussmaterial kann mit jeder Ausgestaltung der Platine 26 und der Wasserschallwandler 24 verwendet werden.

Fig. 2c zeigt das Wasserschallwandlermodul 20 ohne den rückseitigen Wasserschallwandler 24' aus Fig. 2a, wobei die Platine 26 und die Wasserschallwandler 24 mit einer elektrisch leitfähigen Schicht 33 (als Schraffur dargestellt) beschichtet sind. Die elektrisch leitfähige Schicht bietet einmal eine Abschirmung gegen elektromagnetische Beeinflussung, wodurch die Wasserschallsignale verfälscht werden könnten. Ferner bietet die elektrisch leitfähige Schicht eine Diffusionssperre gegen eindringende Feuchtigkeit. Die elektrisch leitfähige Schicht 33 kann mit jeder Ausgestaltung der Platine 26 und der Wasserschallwandler 24 verwendet werden.

Fig. 3 zeigt eine Ausgestaltung der Wasserschallwandler 24, wie sie alternativ zu den in Fig. 1 und Fig. 2 gezeigten Wasserschallwandlern verwendet werden können.

Fig. 3a zeigt eine schematische Seitenansicht des Wasserschallwandlers 24. Der Wasserschallwandler 24 weist eine erste Kugelhalbschale 24a und eine zweite Kugelhalbschale 24b auf. Die erste Kugelhalbschale 24a ist mit einer Vorderseite der Platine 26 bzw. der Nebenstruktur 26b (elektrisch und mechanisch) verbunden. Die zweite Kugelhalbschale 24b ist mit einer Rückseite der Platine 26 bzw. der Nebenstruktur 26b (elektrisch und mechanisch) verbunden. In andere Worten sind die beiden Kugelhalbschalen 24a, 24b mittels der Platine 26 zu einer Hohlkugel zusammengefügt.

Fig. 3b zeigt eine schematische Schnittdarstellung des Wasserschallwandlers 24 aus Fig. 3a. Hier wird deutlich, dass die Platine 26 bzw. die Nebenstruktur 26b der Form des Wasserschallwandlers 24 angepasst ist. D.h., die Platine 26 ist rund geformt und mittig ist ein Loch ausgenommen. Anders ausgedrückt weist die Platine 26 innerhalb einer Projektion der Stirnflächen der Kugelhalbschalen eine Öffnung auf. Durch das Loch werden die akustischen Eigenschaften des Hohlkörpers nicht oder zumindest weniger beeinflusst. Diese Form der Platine 26 kann auch für die hohlzylinderförmigen Wasserschallwandler verwendet werden, jedoch ist es vorteilhaft hier kein Loch in der Platine 26 vorzusehen, um die Stirnflächen des Zylinders abzuschließen.

Fig. 4 zeigt verschiedene Ausführungsformen der Platine 26 in einer Draufsicht auf die Platine. Diese können sowohl als Nebenstruktur im Sinne der Fig. 1 bis 3b verwendet werden als auch als Platine im Sinne der Fig. 3c.

Fig. 4a zeigt eine runde Nebenstruktur 26b mit Loch in der Mitte, also eine ringförmige Nebenstruktur 26b. Die Nebenstruktur 26b ist mit der Hauptstruktur 26a verbunden. Eine erste Leiterbahn 28a und eine zweite Leiterbahn 28b verlaufen von der Nebenstruktur 26b zu der Hauptstruktur 26a. Die erste Leiterbahn 28a und die zweite Leiterbahn 28b umschließen die Nebenstruktur 26b und somit einen Teil der Klebefläche des hier nicht gezeigten Wasserschallwandlers vollständig, wenn der Wasserschallwandler auf der Nebenstruktur 26b angeordnet ist. Die erste Leiterbahn 28a und die zweite Leiterbahn 28b berühren sich jedoch nicht, so dass beide Leiterbahnen unterschiedliche Wasserschallsignale führen können. Die aufeinander zulaufenden Enden der Leiterbahnen können sich überlappen, d.h. ein Stück parallel verlaufen. Somit wird die Sperre gegen eindringende Feuchtigkeit verbessert. Es ist auch möglich, dass sich die aufeinander zulaufenden Enden berühren, so dass nur eine Leiterbahn umlaufend auf der Nebenstruktur angeordnet ist. Dies ist beispielsweise für das Ausführungsbeispiel aus Fig. 1b relevant, wenn die zweite Leiterbahn auf einer zweiten Platine angeordnet ist.

Die erste und die zweite Leiterbahn 28a, 28b bilden ferner eine Mäanderstruktur aus. Die Mäanderstruktur ist dort ausgebildet, wo eine Elektrode der Wasserschallwandler auf die Klebefläche des Wasserschallwandlers geführt ist. Somit wird die Kontaktfläche zwischen Leiterbahn und Elektrode des Wasserschallwandlers verbessert. Die Klebefläche des Wasserschallwandlers ist hier dessen Stirnfläche bzw. Schnittfläche.

Fig. 4b zeigt die Platine aus Fig. 4a mit einem Haftmittel 32. Das Haftmittel 32 umgibt die Nebenstruktur 26b vollständig. D.h., das Haftmittel ist in sich geschlossen auf der Nebenstruktur angeordnet. Somit wird eine sichere mechanische Verbindung zwischen dem Wasserschallwandler und der Platine gewährleistet. Ferner ist oberhalb der Mäanderstruktur ein Leithaftkleber 34 aufgebracht. Der Leithaftkleber 34 bietet eine sichere Kontaktierung der Elektrode des Wasserschallwandlers durch die entsprechende Leiterbahn.

Fig. 4c zeigt die Platine aus Fig. 4b, jedoch weist die Nebenstruktur im Bereich der mäanderförmigen Anordnung der Leiterbahnen einen Vorsprung 36 auf. Der Vorsprung ermöglicht es, den Leithaftkleber 34 großflächig auf die Mäander der Leiterbahnen aufzubringen und gleichzeitig das Haftmittel 32 um den Leithaftkleber 34 herumzuführen, so dass das Haftmittel 32 in sich geschlossen ist. Der Vorsprung kann auch nach Innen in die Aussparung angeordnet sein, wenn das Haftmittel an einer Innenseite des Leithaftmittels vorbeigeführt wird.

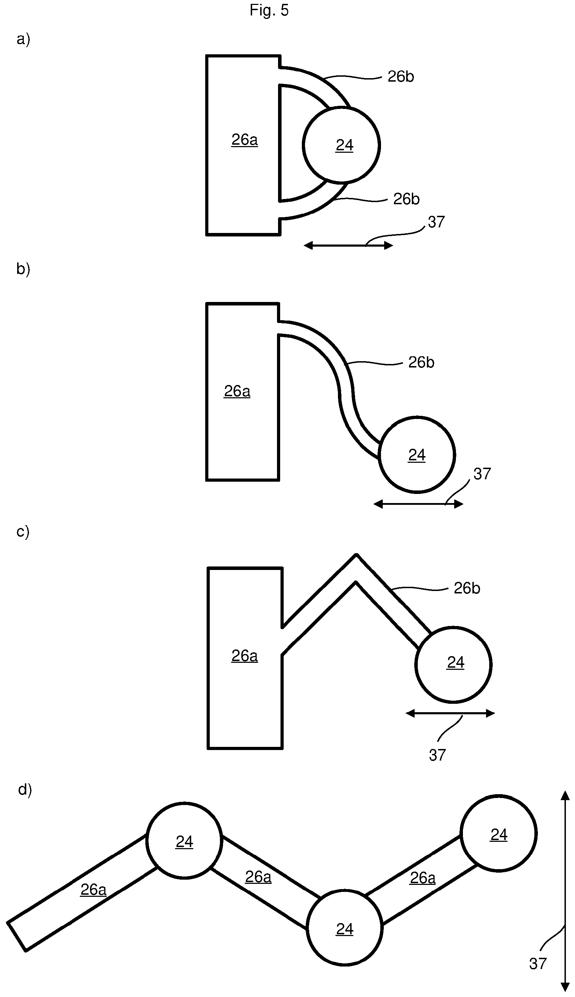

Fig. 5a-c zeigen eine schematische Draufsicht auf mögliche Formen der Nebenstruktur 26b. Die Nebenstruktur 26b verbindet die Hauptstruktur 26a mit dem Wasserschallwandler 24. Hierbei weist die Nebenstruktur 26b einen Richtungswechsel auf. Dies ist vorteilhaft, um beispielsweise Spannungen in Richtung der Hauptstruktur 26a (=Pfeilrichtung 37), die durch das Umgussmaterial auf den Wasserschallwandler 24 einwirken, aufnehmen zu können. So wird der Wasserschallwandler 24 vor einer Schädigung geschützt. Als mögliche Ausgestaltungen der Nebenstruktur 26b offenbart Fig. 5a einen Doppelbogen, Fig. 5b eine S-Form und Fig. 5c eine Dreiecksform.

Fig. 5d zeigt eine alternative Ausgestaltung zu den Fig. 5a-c um den Effekt des Ausgleichs von Spannungen auf die Wasserschallwandler zu kompensieren. Die Platine weist hier nur die Hauptstruktur 26a und keine weiteren Nebenstrukturen auf. Die Hauptstruktur 26a weist jedoch bereits die Richtungswechsel auf, die in den vorherigen Ausführungsbeispielen in der Nebenstruktur lagen. Die Wasserschallwandler 24 sind direkt an der Hauptstruktur 26a der Platine angeordnet. Vorteilhaft ist es, Wasserschallwandler 24 an einem Scheitelpunkt des Richtungswechsels anzuordnen. Somit erhält der Wasserschallwandler 24 den größtmöglichen Bewegungsspielraum, um Spannungen zu kompensieren. Die Platine, d.h. die Hauptstruktur 26a, kann im Bereich der Wasserschallwandler 24 beispielsweise wie in Fig. 4a-c gezeigt, rund ausgeführt sein.

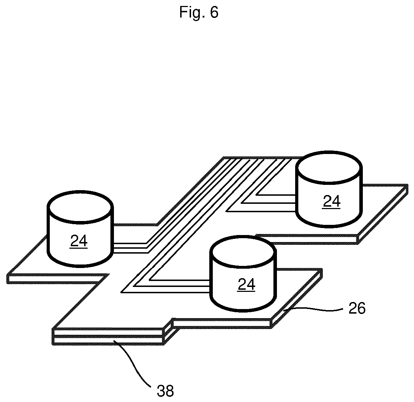

Fig. 6 zeigt eine schematische perspektivische Darstellung des Wasserschallwandlermoduls mit einer Verstärkungsstruktur 38. Die Verstärkungsstruktur 38 ist mit der Platine 26 mechanisch verbunden, insbesondere verklebt. Statt der Verklebung können auch Stützen verwendet werden, um die Verstärkungsstruktur 38 mit der Platine 26 zu verbinden. Die Verstärkungsstruktur ist steifer als die Platine 26, so dass die Verstärkungsstruktur 28 ein Biegen der Platine 26 verhindert. Insbesondere verhindert die Verstärkungsstruktur 28 ein Biegen der Platine 26 wenn die Platine an einem Punkt fixiert ist und die Schwerkraft auf die (bestückte) Platine wirkt. Wenn die Nebenstruktur geschwungen ausgebildet ist, ist vorteilhafterweise jedoch nur die Hauptstruktur der Platine gestützt. Die Nebenstruktur(en) sind dann freischwebend an der Hauptstruktur angeordnet.

Die offenbarten (Wasser-) Schallwandler sind für den Einsatz unter Wasser, insbesondere im Meer, ausgelegt. Die Schallwandler sind ausgebildet, Wasserschall in eine dem Schalldruck entsprechenden elektrischen Signal (z.B. Spannung oder Strom), das Wasserschallsignal, umzuwandeln. Überdies sind die Schallwandler ausgebildet, eine anliegende elektrische Spannung in Wasserschall umzuwandeln. Die Schallwandler können demnach als Wasserschallwandler und/oder als Wasserschallsender verwendet werden. Als sensorisches Material weisen die Schallwandler ein piezoelektrisches Material, beispielsweise eine Piezokeramik, auf. Die Schallwandler können für (Aktiv- und/oder Passiv-) Sonar (sound navigation and ranging, dt.: Schall-Navigation und -Entfernungsbestimmung) eingesetzt werden. Die Schallwandler sind nicht für medizinische Anwendungen geeignet.

### Bezugszeichenliste:

- 20: Wasserschallwandlermodul
- 22: Wasserschall
- 24: Wasserschallwandler
- 26: Platine
- 26a: Hauptstruktur
- 26b: Nebenstruktur
- 27: Verbindungselement
- 28: Leiterbahn
- 29: Kontaktierung
- 30: Signalverarbeitung
- 31: Umgussmaterial
- 32: Haftmittel
- 33: elektrisch leitfähige Schicht
- 34: Leithaftmittel
- 36: Vorsprung
- 37: Bewegungsrichtung der Wasserschallwandler
- 38: Verstärkungsstruktur
- 38a: Stützen

## Patentansprüche

1. Wasserschallwandlermodul (20) zum Empfang oder Aussenden von Wasserschall (22) mit folgenden Merkmalen:
einem Wasserschallwandler (24), der ausgebildet ist, den Wasserschall (22) zu empfangen und entsprechend des empfangenen Wasserschalls ein Wasserschallsignal auszugeben und/oder den Wasserschall basierend auf einem Wasserschallsignal auszusenden;
einer Platine (26), die ausgebildet ist, das Wasserschallsignal für eine Signalverarbeitung (30) bereitzustellen;
wobei der Wasserschallwandler (24) mittels eines Haftmittels mechanisch mit der Platine (26) verbunden ist und wobei der Wasserschallwandler (24) elektrisch mit der Platine (26) verbunden ist,
wobei die Platine (26) eine erste und eine zweite Leiterbahn (28) aufweist, um eine Verbindung zwischen dem Wasserschallwandler und der Signalverarbeitung (30) bereitzustellen;
wobei der Wasserschallwandler (24) eine erste und eine zweite Elektrode aufweist,
wobei die erste Elektrode mit der ersten Leiterbahn (28) und die zweite Elektrode mit der zweiten Leiterbahn (28) elektrisch verbunden ist,
wobei der Wasserschallwandler (24) eine Klebefläche ausbildet, wobei die Klebefläche auf der Platine (26) aufliegt und auf der Platine (26) einen Auflagebereich bildet, wobei die erste und/oder die zweite Leiterbahn (28) in dem Auflagebereich der Platine (26) verlaufen
**dadurch gekennzeichnet, dass** die erste und/oder die zweite Leiterbahn (28) zumindest einen Teil der Klebefläche des Wasserschallwandlers einzeln oder gemeinsam zumindest zu 75% umschließen.

2. Wasserschallwandlermodul (20) gemäß Anspruch 1,
wobei die erste und/oder die zweite Leiterbahn (28) zumindest einen Teil der Klebefläche des Wasserschallwandlers einzeln oder gemeinsam zumindest zu 95%, insbesondere vollständig, umschließen.

3. Wasserschallwandlermodul (20) gemäß einem der vorherigen Ansprüche,
wobei die erste Elektrode des Wasserschallwandlers auf einen Teilbereich der Klebefläche des Wasserschallwandlers geführt ist, wobei die erste Leiterbahn (28) in dem Auflagebereich, der den Teilbereich der Klebefläche kontaktiert, mäanderförmig angeordnet ist;
und/oder
wobei die zweite Elektrode des Wasserschallwandlers auf einen weiteren Teilbereich der Klebefläche des Wasserschallwandlers geführt ist, wobei die zweite Leiterbahn (28) in dem Auflagebereich, der den weiteren Teilbereich der Klebefläche kontaktiert, mäanderförmig angeordnet ist.

4. Wasserschallwandlermodul (20) gemäß einem der vorherigen Ansprüche,
wobei der Wasserschallwandler (24) eine erste und eine zweite Kugelhalbschale aufweist, wobei die erste und die zweite Kugelhalbschale jeweils eine Klebefläche aufweisen, die die Platine (26) vorder- und rückseitig kontaktieren um eine Hohlkugel zu bilden;

5. Wasserschallwandlermodul (20) gemäß einem der vorherigen Ansprüche,
wobei der Wasserschallwandler (24) einen Zylinder ausbildet, wobei eine Stirnfläche des Zylinders die Klebefläche ausbildet.

6. Wasserschallwandlermodul (20) gemäß einem der vorherigen Ansprüche,
wobei der Wasserschallwandler (24) mittels eines Leithaftmittels elektrisch mit der Platine (26) verbunden ist, insbesondere wobei sich das Leithaftmittel (34) von dem Haftmittel (32) unterscheidet.

7. Wasserschallwandlermodul (20) gemäß Anspruch 6,
wobei das Haftmittel (32) derart zwischen der Platine (26) und dem Wasserschallwandler (24) angeordnet ist, dass das Haftmittel (32) eine in sich geschlossenen Form bildet.

8. Wasserschallwandlermodul (20) gemäß einem der Ansprüche 6 oder 7,
wobei das Leithaftmittel (34) ergänzend zu dem Haftmittel (32) zwischen der Platine (26) und dem Wasserschallwandler (24) angeordnet ist.

9. Wasserschallwandlermodul (20) gemäß einem der vorherigen Ansprüche,
mit einer Verstärkungsstruktur, wobei die Verstärkungsstruktur (38) mechanisch mit der Platine (26) verbunden ist.

10. Wasserschallwandlermodul (20) gemäß Anspruch 9,
wobei die Verstärkungsstruktur (38) eine Hauptstruktur der Platine (26) stützt.

11. Wasserschallwandlermodul (20) gemäß einem der vorherigen Ansprüche,
wobei die Platine (26) und der Wasserschallwandler (24) von einem Umgussmaterial (31) umschlossen ist.

12. Wasserschallwandlermodul (20) gemäß einem der vorherigen Ansprüche,
wobei die Platine (26) eine Hauptstruktur (26a) und eine Nebenstruktur (26b) aufweist, wobei die Nebenstruktur (26b) den Wasserschallwandler (24) mit der Hauptstruktur (26a) verbindet, wobei die Nebenstruktur (26b) einen Richtungswechsel aufweist
oder
wobei die Wasserschallwandler an der Hauptstruktur angeordnet sind und wobei die Hauptstruktur einen Richtungswechsel aufweist.

13. Wasserschallwandlermodul (20) gemäß einem der vorherigen Ansprüche, wobei der Wasserschallwandler (24) oder das Wasserschallwandlermodul (20) mit einer elektrisch leitenden Schicht (33) beschichtet ist.

14. Verfahren zur Herstellung eines Wasserschallwandlermoduls zum Empfang oder Aussenden von Wasserschall (22) mit folgenden Schritten:
Bereitstellen eines Wasserschallwandlers mit einer ersten und einer zweiten Elektrode sowie einer Klebefläche, wobei der Wasserschallwandler ausgebildet ist, den Wasserschall (22) zu empfangen und entsprechend des empfangenen Wasserschalls ein Wasserschallsignal auszugeben und/oder den Wasserschall basierend auf einem Wasserschallsignal auszusenden;
Bereitstellen einer Platine (26), die ausgebildet ist, das Wasserschallsignal mit einer ersten und einer zweiten Leiterbahn (28) für eine Signalverarbeitung (30) bereitzustellen;
Verbinden der Klebefläche des Wasserschallwandlers mechanisch mittels eines Haftmittels mit der Platine, wobei die Klebefläche auf der Platine aufliegt und dort einen Auflagebereich bildet und die erste und/oder die zweite Leiterbahn in dem Auflagebereich verlaufen;
Verbinden der ersten Elektrode des Wasserschallwandlers elektrisch mit der ersten Leiterbahn der Platine und Verbinden der zweite Elektrode des Wasserschallwandler elektrisch mit der zweiten Leiterbahn der Platine; **dadurch gekennzeichnet, dass** die erste und/oder die zweite Leiterbahn (28) zumindest einen Teil der Klebefläche des Wasserschallwandlers einzeln oder gemeinsam zumindest zu 75% umschließen.

15. Verfahren gemäß Anspruch 14; mit
Verbinden einer Verstärkungsstruktur (38) mechanisch mit der Platine (26), Einspannen der Verstärkungsstruktur (38) in eine Gießform, so dass der Wasserschallwandler frei schwebt;
Umgießen des Wasserschallwandlers und der Platine um das Wasserschallwandlermodul zu erhalten.

## Claims

1. Underwater sound transducer module (20) for receiving or emitting underwater sound (22), comprising:
- an underwater sound transducer (24), which is configured to receive the underwater sound (22) and to output an underwater sound signal corresponding to the received underwater sound and/or to emit the underwater sound based on an underwater sound signal;
- a printed circuit board (26), which is configured to provide the underwater sound signal for a signal processing unit (30);
- wherein the underwater sound transducer (24) is mechanically connected to the printed circuit board (26) by means of an adhesive, and wherein the underwater sound transducer (24) is electrically connected to the printed circuit board (26);
- wherein the printed circuit board (26) comprises a first and a second conductor track (28) in order to provide a connection between the underwater sound transducer and the signal processing unit (30);
- wherein the underwater sound transducer (24) comprises a first and a second electrode, wherein the first electrode is electrically connected to the first conductor track (28), and the second electrode is electrically connected to the second conductor track (28);
- wherein the underwater sound transducer (24) forms an adhesive surface, wherein the adhesive surface rests on the printed circuit board (26) and forms a contact area on the printed circuit board (26), wherein the first and/or the second conductor track (28) extends through the contact area of the printed circuit board (26);
- wherein the first and/or the second conductor track (28) individually or jointly encloses at least 75% of at least a portion of the adhesive surface of the underwater sound transducer.

2. Underwater sound transducer module (20) according to claim 1,
**characterised in that** the first and/or the second conductor track (28) individually or jointly encloses at least 95%, in particular completely, of at least a portion of the adhesive surface of the underwater sound transducer.

3. Underwater sound transducer module (20) according to one of the preceding claims,
- wherein the first electrode of the underwater sound transducer is routed to a sub-area of the adhesive surface of the underwater sound transducer,
wherein the first conductor track (28) is arranged in a meandering manner within the contact area that contacts the sub-area of the adhesive surface;
and/or
- wherein the second electrode of the underwater sound transducer is routed to a further sub-area of the adhesive surface of the underwater sound transducer,
wherein the second conductor track (28) is arranged in a meandering manner within the contact area that contacts the further sub-area of the adhesive surface.

4. Underwater sound transducer module (20) according to one of the preceding claims,
wherein the underwater sound transducer (24) comprises a first and a second hemispherical shell,
wherein the first and the second hemispherical shell each comprise an adhesive surface which contacts the front and rear sides of the printed circuit board (26) in order to form a hollow sphere.

5. Underwater sound transducer module (20) according to one of the preceding claims,
wherein the underwater sound transducer (24) forms a cylinder,
wherein an end face of the cylinder forms the adhesive surface.

6. Underwater sound transducer module (20) according to one of the preceding claims,
wherein the underwater sound transducer (24) is electrically connected to the printed circuit board (26) by means of a conductive adhesive,
in particular wherein the conductive adhesive (34) is different from the adhesive (32).

7. Underwater sound transducer module (20) according to claim 6,
wherein the adhesive (32) is arranged between the printed circuit board (26) and the underwater sound transducer (24) in such a way
that the adhesive (32) forms a self-contained shape.

8. Underwater sound transducer module (20) according to one of claims 6 or 7, wherein the conductive adhesive (34), in addition to the adhesive (32), is arranged between the printed circuit board (26) and the underwater sound transducer (24).

9. Underwater sound transducer module (20) according to one of the preceding claims,
comprising a reinforcing structure,
wherein the reinforcing structure (38) is mechanically connected to the printed circuit board (26).

10. Underwater sound transducer module (20) according to claim 9,
wherein the reinforcing structure (38) supports a main structure of the printed circuit board (26).

11. Underwater sound transducer module (20) according to one of the preceding claims,
wherein the printed circuit board (26) and the underwater sound transducer (24) are enclosed by a potting material (31).

12. Underwater sound transducer module (20) according to one of the preceding claims,
wherein the printed circuit board (26) comprises a main structure (26a) and a secondary structure (26b),
wherein the secondary structure (26b) connects the underwater sound transducer (24) to the main structure (26a),
wherein the secondary structure (26b) comprises a change in direction; or
wherein the underwater sound transducers are arranged on the main structure and the main structure comprises a change in direction.

13. Underwater sound transducer module (20) according to one of the preceding claims,
wherein the underwater sound transducer (24) or the underwater sound transducer module (20) is coated with an electrically conductive layer (33).

14. Method for manufacturing an underwater sound transducer module for receiving or emitting underwater sound (22), comprising the steps of:
- providing an underwater sound transducer with a first and a second electrode as well as an adhesive surface,
wherein the underwater sound transducer is configured to receive the underwater sound (22) and to output an underwater sound signal corresponding to the received underwater sound and/or to emit the underwater sound based on an underwater sound signal;
- providing a printed circuit board (26), which is configured to provide the underwater sound signal with a first and a second conductor track (28) for a signal processing unit (30);
- mechanically connecting the adhesive surface of the underwater sound transducer to the printed circuit board by means of an adhesive,
wherein the adhesive surface rests on the printed circuit board and forms a contact area thereon, and the first and/or the second conductor track runs within the contact area;
- electrically connecting the first electrode of the underwater sound transducer to the first conductor track of the printed circuit board and electrically connecting the second electrode of the underwater sound transducer to the second conductor track of the printed circuit board;
**characterised in that** the first and/or the second conductor track (28) individually or jointly encloses at least 75% of at least a portion of the adhesive surface of the underwater sound transducer.

15. Method according to claim 14, comprising the steps of:
- mechanically connecting a reinforcing structure (38) to the printed circuit board (26);
- clamping the reinforcing structure (38) into a casting mould in such a way that the underwater sound transducer is freely suspended;
- encapsulating the underwater sound transducer and the printed circuit board in order to obtain the underwater sound transducer module.

## Revendications

1. Module transducteur acoustique sous-marin (20) pour la réception ou l'émission de sons sous-marins (22), comportant les caractéristiques suivantes :
- un transducteur acoustique sous-marin (24) conçu pour recevoir les sons sous-marins (22) et émettre un signal acoustique sous-marin en fonction des sons sous-marins reçus et/ou émettre les sons sous-marins sur la base d'un signal acoustique sous-marin ;
- une carte de circuit imprimé (26) conçue pour fournir le signal acoustique sous-marin à une unité de traitement de signal (30) ;
- le transducteur acoustique sous-marin (24) étant relié mécaniquement à la carte de circuit imprimé (26) au moyen d'un adhésif et électriquement à la carte de circuit imprimé (26) ;
- la carte de circuit imprimé (26) comportant une première et une deuxième piste conductrice (28) pour établir une connexion entre le transducteur acoustique sous-marin et l'unité de traitement de signal (30) ;
- le transducteur acoustique sous-marin (24) comportant une première et une deuxième électrode, la première électrode étant reliée électriquement à la première piste conductrice (28) et la deuxième à la deuxième piste conductrice (28) ;
- le transducteur acoustique sous-marin (24) formant une surface adhésive, ladite surface adhésive reposant sur la carte de circuit imprimé (26) et formant une zone de contact sur cette dernière, la première et/ou la deuxième piste conductrice (28) s'étendant dans ladite zone de contact ;
- la première et/ou la deuxième piste conductrice (28) entourant individuellement ou conjointement au moins 75 % d'au moins une partie de la surface adhésive du transducteur acoustique sous-marin.

2. Module transducteur acoustique sous-marin (20) selon la revendication 1,
**caractérisé en ce que** la première et/ou la deuxième piste conductrice (28) entourent au moins 95 %, en particulier complètement, au moins une partie de la surface adhésive du transducteur acoustique sous-marin, individuellement ou ensemble.

3. Module transducteur acoustique sous-marin (20) selon l'une des revendications précédentes,
- la première électrode du transducteur acoustique sous-marin étant conduite sur une sous-zone de la surface adhésive du transducteur acoustique sous-marin, la première piste conductrice (28) étant disposée en forme de méandre dans la zone de contact qui entre en contact avec ladite sous-zone ;
et/ou
- la deuxième électrode du transducteur acoustique sous-marin étant conduite sur une autre sous-zone de la surface adhésive du transducteur acoustique sous-marin, la deuxième piste conductrice (28) étant disposée en forme de méandre dans la zone de contact qui entre en contact avec ladite autre sous-zone.

4. Module transducteur acoustique sous-marin (20) selon l'une des revendications précédentes,
le transducteur acoustique sous-marin (24) comportant une première et une deuxième demi-coque sphérique, chaque demi-coque sphérique présentant une surface adhésive qui entre en contact respectivement avec la face avant et la face arrière de la carte de circuit imprimé (26) afin de former une sphère creuse.

5. Module transducteur acoustique sous-marin (20) selon l'une des revendications précédentes,
le transducteur acoustique sous-marin (24) étant de forme cylindrique, une face frontale du cylindre formant la surface adhésive.

6. Module transducteur acoustique sous-marin (20) selon l'une des revendications précédentes,
le transducteur acoustique sous-marin (24) étant électriquement connecté à la carte de circuit imprimé (26) au moyen d'un adhésif conducteur, l'adhésif conducteur (34) étant différent de l'adhésif (32).

7. Module transducteur acoustique sous-marin (20) selon la revendication 6,
l'adhésif (32) étant disposé entre la carte de circuit imprimé (26) et le transducteur acoustique sous-marin (24) de telle sorte qu'il forme une forme fermée.

8. Module transducteur acoustique sous-marin (20) selon l'une des revendications 6 ou 7,
l'adhésif conducteur (34) étant disposé, en complément de l'adhésif (32), entre la carte de circuit imprimé (26) et le transducteur acoustique sous-marin (24).

9. Module transducteur acoustique sous-marin (20) selon l'une des revendications précédentes,
comprenant une structure de renforcement (38) reliée mécaniquement à la carte de circuit imprimé (26).

10. Module transducteur acoustique sous-marin (20) selon la revendication 9,
la structure de renforcement (38) supportant une structure principale de la carte de circuit imprimé (26).

11. Module transducteur acoustique sous-marin (20) selon l'une des revendications précédentes,
la carte de circuit imprimé (26) et le transducteur acoustique sous-marin (24) étant encapsulés dans un matériau de moulage (31).

12. Module transducteur acoustique sous-marin (20) selon l'une des revendications précédentes,
la carte de circuit imprimé (26) présentant une structure principale (26a) et une structure secondaire (26b), la structure secondaire (26b) reliant le transducteur acoustique sous-marin (24) à la structure principale (26a), la structure secondaire (26b) présentant un changement de direction,
ou
les transducteurs acoustiques sous-marins étant disposés sur la structure principale et la structure principale présentant un changement de direction.

13. Module transducteur acoustique sous-marin (20) selon l'une des revendications précédentes,
le transducteur acoustique sous-marin (24) ou le module transducteur acoustique sous-marin (20) étant revêtu d'une couche conductrice électriquement (33).

14. Procédé de fabrication d'un module transducteur acoustique sous-marin pour la réception ou l'émission de sons sous-marins (22), comportant les étapes suivantes :
- mise à disposition d'un transducteur acoustique sous-marin avec une première et une deuxième électrode ainsi qu'une surface adhésive, le transducteur étant conçu pour recevoir les sons sous-marins (22) et émettre un signal acoustique sous-marin en fonction des sons sous-marins reçus et/ou émettre les sons sous-marins sur la base d'un signal acoustique sous-marin ;
- mise à disposition d'une carte de circuit imprimé (26), conçue pour fournir le signal acoustique sous-marin à l'aide d'une première et d'une deuxième piste conductrice (28) à une unité de traitement de signal (30) ;
- liaison mécanique de la surface adhésive du transducteur acoustique sous-marin à la carte de circuit imprimé au moyen d'un adhésif, la surface adhésive reposant sur la carte de circuit imprimé et y formant une zone de contact, la première et/ou la deuxième piste conductrice s'étendant dans la zone de contact ;
- liaison électrique de la première électrode du transducteur acoustique sous-marin à la première piste conductrice de la carte de circuit imprimé, et liaison électrique de la deuxième électrode à la deuxième piste conductrice de la carte de circuit imprimé ;
**caractérisé en ce que** la première et/ou la deuxième piste conductrice (28) entourent individuellement ou conjointement au moins 75 % d'au moins une partie de la surface adhésive du transducteur acoustique sous-marin.

15. Procédé selon la revendication 14, comprenant les étapes suivantes :
- liaison mécanique d'une structure de renforcement (38) à la carte de circuit imprimé (26) ;
- fixation de la structure de renforcement (38) dans un moule de coulée de sorte que le transducteur acoustique sous-marin soit maintenu en suspension libre ;
- moulage du transducteur acoustique sous-marin et de la carte de circuit imprimé pour obtenir le module transducteur acoustique sous-marin.
